(19) **Europäisches Patentamt / European Patent Office / Office européen des brevets**

(11) **EP 4 697 678 A1**

(12) **EUROPEAN PATENT APPLICATION**
published in accordance with Art. 153(4) EPC

(43) Date of publication:
**18.02.2026 Bulletin 2026/08**

(21) Application number: **24799823.0**

(22) Date of filing: **09.01.2024**

(51) International Patent Classification (IPC):
**H04L 67/1008** (2022.01)

(52) Cooperative Patent Classification (CPC):
**H04L 67/1008**

(86) International application number:
**PCT/CN2024/071300**

(87) International publication number:
**WO 2024/227365 (07.11.2024 Gazette 2024/45)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **04.05.2023 CN 202310492451
05.07.2023 CN 202310820305**

(71) Applicant: **Huawei Cloud Computing
Technologies Co., Ltd.
Guiyang, Guizhou 550025 (CN)**

(72) Inventors:
• **ZHANG, Lin
Guiyang, Guizhou 550025 (CN)**
• **DUAN, Bin
Guiyang, Guizhou 550025 (CN)**
• **WU, Zhou
Guiyang, Guizhou 550025 (CN)**

(74) Representative: **Isarpatent
Patent- und Rechtsanwälte Partg mbB
Friedrichstraße 31
80801 München (DE)**

(54) **CLOUD PLATFORM MANAGEMENT METHOD AND DEVICE, PROGRAM PRODUCT, AND STORAGE MEDIUM**

(57) Embodiments of this application relate to the field of cloud computing, and provide a cloud platform management method and an apparatus, a program product, and a storage medium, to quickly adjust load pressure of a cloud platform. The method includes: grouping a plurality of cloud service components in a cloud platform into a plurality of communities based on call relationships between the plurality of cloud service components, where a degree of closeness of a call relationship between cloud service components included in each community is greater than or equal to a preset degree of closeness, and a degree of closeness between a cloud service component in any one of the plurality of communities and a cloud service component in another community is less than the preset degree of closeness; and if a target component in a first community of the plurality of communities meets a first preset condition, creating a second community, where the second community is the same as the first community, the second community is configured to share a part of load of the first community, the first preset condition indicates that performance of the target component is lower than preset performance, and the target component is at least one of a plurality of cloud service components in the first community.

EP 4 697 678 A1

**Management device**

S110: Obtain call relationships between a plurality of cloud service components in a cloud platform

Call relationship

②  ③  ⑥
①  ④  ⑤

S120: Group into a plurality of communities

Call relationship

Community A

②  ③  ⑥  Community B
①  ④  ⑤

S130

Yes ← Does a target component in a first community meet a first preset condition? → No

S140: Create a second community

End

Call relationship

Community A

②  ③  ⑥  Community B
①  ④  ⑤

③'  ②'  Community A'
①'

FIG. 2

**EP 4 697 678 A1**

**Description**

This application claims priority to Chinese Patent Application No. 202310492451.0, filed with the China National Intellectual Property Administration on May 4, 2023 and entitled "SERVICE PERFORMANCE ANALYSIS METHOD AND SYSTEM", and Chinese Patent Application No. 202310820305.6, filed with the China National Intellectual Property Administration on July 5, 2023, and entitled "CLOUD PLATFORM MANAGEMENT METHOD AND APPARATUS, PROGRAM PRODUCT, AND STORAGE MEDIUM", both of which are incorporated herein by reference in their entireties.

**TECHNICAL FIELD**

Embodiments of this application relate to the field of cloud computing, and in particular, to a cloud platform management method and an apparatus, a program product, and a storage medium.

**BACKGROUND**

Cloud services (Cloud services) are required services obtained on demand in a scalable manner through a network, based on a model for using, and delivering related services over the Internet. A cloud service means that a computing capability can also be circulated through the Internet as a commodity. A plurality of cloud services constitute a cloud platform, and the cloud platform is configured to provide a powerful computing service for a user. Each cloud service may include a plurality of cloud service components, and dependency relationships and/or association relationships exist between the plurality of cloud service components.

As application scenarios of cloud services increase continuously, customers pay more attention to processing capabilities of cloud platforms or cloud services under heavy load. A common method for processing pressure on cloud service components in a cloud platform includes: operation and maintenance personnel monitor an out-degree and an in-degree of each cloud service component in the cloud platform and a data transmission frequency of a link between the cloud service components, and determine, based on experience, whether any hot point and hot link exist in the cloud platform. When a hot point and a hot link exist in the cloud platform, the operation and maintenance personnel perform capacity expansion on the hot point and the hot link based on experience.

However, during the capacity expansion of the hot point or the hot link, the operation and maintenance personnel can only adjust load of cloud service components one by one, and cannot quickly adjust load pressure of the cloud platform, resulting in limited performance of the cloud platform.

**SUMMARY**

Embodiments of this application provide a cloud platform management method and an apparatus, a program product, and a storage medium, to quickly adjust load pressure of a cloud platform.

To achieve the foregoing objective, the following technical solutions are used in embodiments of this application: According to a first aspect, an embodiment of this application provides a cloud platform management method. The method includes: grouping a plurality of cloud service components in a cloud platform into a plurality of communities based on call relationships between the plurality of cloud service components, where each community includes at least two of the plurality of cloud service components, a degree of closeness of a call relationship between cloud service components included in each community is greater than or equal to a preset degree of closeness, and a degree of closeness between a cloud service component in any one of the plurality of communities and a cloud service component in another one of the plurality of communities is less than the preset degree of closeness; and if a target component in a first community of the plurality of communities meets a first preset condition, creating a second community, where the second community is the same as the first community, the second community is configured to share a part of load of the first community, the first preset condition indicates that performance of the target component is lower than preset performance, the first community is any one of the plurality of communities, and the target component is at least one of a plurality of cloud service components in the first community.

Based on this, an embodiment of this application provides a cloud platform management method. The method includes: grouping, based on call relationships between a plurality of cloud service components in a cloud platform, the plurality of cloud service components into a plurality of communities including a first community, where a degree of closeness of a call relationship between cloud service components in a community is relatively high, and a degree of closeness of a call relationship between communities is relatively low; and when the first community meets a preset condition, creating a second community same as the first community (for example, cloning the first community to obtain the second community), so that the second community shares a part of load of the first community. Therefore, when load pressure of the cloud platform is relatively high, an entire community including a plurality of cloud service components is cloned. Because a degree of closeness of a call relationship between cloud service components in the entire community is

3

relatively high, load balancing can be performed on the first community and the second community to quickly adjust the load pressure of the cloud platform, thereby improving working performance of the cloud platform.

In a possible implementation, the call relationship includes one or more of the following: call information of the plurality of cloud service components in the cloud platform, a call frequency of a link between any two of the plurality of cloud service components in the cloud platform, and an out-degree and an in-degree of any one of the plurality of cloud service components in the cloud platform.

In a possible implementation, the call information includes: an identifier of a cloud service component called by a first component when the first component is a calling component; and an identifier of a cloud service component calling the first component when the first component is a called component, where the first component is any one of the plurality of cloud service components in the cloud platform.

In a possible implementation, grouping the plurality of cloud service components in the cloud platform into the plurality of communities based on the call relationships between the plurality of cloud service components includes: grouping the plurality of cloud service components into the plurality of communities based on a community discovery algorithm and the call relationships.

In a possible implementation, the target component includes: a cloud service component that meets a second preset condition among the plurality of cloud service components in the first community, or at least one cloud service component specified by a user among the plurality of cloud service components in the first community.

In a possible implementation, the second preset condition includes top X cloud service components with highest popularity values among the plurality of cloud service components in the first community, where the popularity value is a sum of an out-degree of a cloud service component and an in-degree of the cloud service component, and X is an integer greater than 0.

In a possible implementation, creating the second community if the target component in the first community of the plurality of communities meets the first preset condition includes: if a first target feature of the target component meets the first preset condition, creating the second community, where the first target feature is at least one feature specified by the user among a plurality of features of the target component.

In a possible implementation, the first target feature includes at least one of processor CPU usage, memory usage, and an I/O throughput.

In a possible implementation, when the first target feature includes the CPU usage, the first preset condition includes: the CPU usage is higher than preset CPU usage; when the first target feature includes the memory usage, the first preset condition includes: the memory usage is higher than preset memory usage; or when the first target feature includes the I/O throughput, the first preset condition includes: the I/O throughput is higher than a preset I/O throughput.

In a possible implementation, creating the second community includes: obtaining modularity between the first community and each of other communities than the first community among the plurality of communities, where the modularity is a value used to describe a degree of closeness of a call relationship between communities; determining, based on the modularity, whether a target community exists among the other communities, where the target community is a community whose modularity with the first community is greater than a threshold among the other communities; and when the target community does not exist among the other communities, creating the second community.

In a possible implementation, when the target community exists among the other communities, a second community combination is created, where the second community combination is the same as a first community combination including the first community and the target community, the second community combination includes the second community and a third community, the third community is the same as the target community, and the second community combination is used to share a part of load of the first community combination.

In this embodiment of this application, it is determined whether the target community whose modularity with the first community is greater than the threshold exists among the plurality of communities; and when the target community exists (that is, a community whose degree of closeness of a call relationship with the first community is relatively high exists), the first community and the target community are used as an entire community (that is, the first community combination), and the second community combination that includes the second community and the third community and that is the same as the first community combination is created, where the second community combination is used to share load of the first community combination, so as to resolve a problem that load pressure of the target community is excessively high because capacity expansion is performed only on the first community, and further improve effectiveness of reducing the load pressure of the cloud platform.

In a possible implementation, the method further includes: if the target component does not meet the first preset condition, determining a hot point and a hot link based on a call relationship between cloud service components in the first community, where the hot point is a cloud service component with a relatively high call frequency among the plurality of cloud service components in the first community, and the hot link is a link with a relatively high call frequency between the plurality of cloud service components; and processing the hot point and the hot link based on a preset mitigation policy, where the preset mitigation policy is used to enable the processed hot point and hot link to meet respective current load requirements.

In the foregoing embodiment, when the target component in the first community does not meet the first preset condition, the hot point and the hot link in the first community are determined; and then a target hot point mitigation policy is determined based on the community in which the hot point is located and a third preset condition that a second target feature of the hot point meets, and the hot point is processed based on the target hot point mitigation policy, so that load pressure of the hot point is mitigated. Similarly, a management apparatus determines that a hot link mitigation policy corresponding to a fourth preset condition that a third target feature of the hot link meets is a target hot link mitigation policy, and processes the hot link based on the target hot link mitigation policy, to reduce load pressure of the processed hot link, thereby resolving a problem that the cloud platform breaks down due to relatively heavy load of at least one cloud service component and link in the first community.

In a possible implementation, the hot point is top N cloud service components with highest popularity values among the plurality of cloud service components included in the first community, where the popularity value is a sum of an out-degree of a cloud service component and an in-degree of the cloud service component, and N is an integer greater than 0; and the hot link is top M links with highest call frequencies among a plurality of links between the plurality of cloud service components included in the first community, where M is an integer greater than 0.

In a possible implementation, processing the hot point based on the preset policy includes: determining a target hot point mitigation policy from a first target correspondence based on an identifier of a community in which the hot point is located and a second target feature of the hot point, where the first target correspondence includes a correspondence between identifiers of the plurality of communities, a plurality of third preset conditions, and a plurality of hot point mitigation policies, the second target feature is a feature specified in advance by the user among a plurality of features of the hot point, and the third preset condition is used to determine whether to perform capacity expansion on the hot point; and processing the hot point based on the target hot point mitigation policy.

In a possible implementation, the hot point mitigation policy includes: reset scaling and/or horizontal scaling.

In a possible implementation, processing the hot link based on the preset policy includes: determining a target hot link mitigation policy from a second target correspondence based on a third target feature of the hot link, where the second target correspondence includes a correspondence between a plurality of fourth preset conditions and a plurality of hot link mitigation policies, and the third target feature is a feature specified in advance by the user among a plurality of features of the hot link; and processing the hot link based on the target hot link mitigation policy.

In a possible implementation, the hot link mitigation policy includes: lateral scaling and/or longitudinal scaling.

In a possible implementation, processing the hot point and the hot link based on the preset policy includes: determining a target type template from a plurality of preset type templates based on a distribution feature of the hot point and the hot link, where the distribution feature is used to represent spatial location information of the hot point and the hot link, and the target type template is a type template having a highest degree of matching with the distribution feature among the plurality of preset type templates; determining, from a correspondence between a plurality of type templates and a plurality of mitigation policies, a target mitigation policy corresponding to the target type template; and processing the hot point and the hot link based on the target mitigation policy.

In the foregoing embodiment, when the target component in the first community does not meet the first preset condition, the hot point and the hot link in the first community are determined; and then the management apparatus determines the target type template from the plurality of preset type templates based on the distribution feature of the hot point and the hot link, and processes the hot point and the hot link based on the target mitigation policy corresponding to the target type template, to reduce load pressure of the processed hot point and hot link, thereby resolving a problem that the cloud platform breaks down due to relatively heavy load of at least one cloud service component and link in the first community.

According to a second aspect, this application provides a management apparatus. The management apparatus includes a grouping module and a creation module. The grouping module is configured to group a plurality of cloud service components in a cloud platform into a plurality of communities based on call relationships between the plurality of cloud service components, where each community includes at least two of the plurality of cloud service components, a degree of closeness of a call relationship between cloud service components included in each community is greater than or equal to a preset degree of closeness, and a degree of closeness between a cloud service component in any one of the plurality of communities and a cloud service component in another one of the plurality of communities is less than the preset degree of closeness; and the creation module is configured to create a second community if a target component in a first community of the plurality of communities meets a first preset condition, where the second community is the same as the first community, the second community is configured to share a part of load of the first community, the first preset condition indicates that performance of the target component is lower than preset performance, the first community is any one of the plurality of communities, and the target component is at least one of a plurality of cloud service components in the first community.

In a possible implementation, the call relationship includes one or more of the following: call information of the plurality of cloud service components in the cloud platform, a call frequency of a link between any two of the plurality of cloud service components in the cloud platform, and an out-degree and an in-degree of any one of the plurality of cloud service components in the cloud platform, where the call information includes: an identifier of a cloud service component called by a first component when the first component is a calling component; and an identifier of a cloud service component calling the first component when the first component is a called component, where the first component is any one of the plurality of cloud service components in the cloud platform.

In a possible implementation, the grouping module is specifically configured to group the plurality of cloud service components into the plurality of communities based on a community discovery algorithm and the call relationships.

In a possible implementation, the target component includes: a cloud service component that meets a second preset condition among the plurality of cloud service components in the first community, or at least one cloud service component specified by a user among the plurality of cloud service components in the first community.

In a possible implementation, the second preset condition includes top X cloud service components with highest popularity values among the plurality of cloud service components in the first community, where the popularity value is a sum of an out-degree of a cloud service component and an in-degree of the cloud service component, and X is an integer greater than 0.

In a possible implementation, the creation module is configured to create the second community if a first target feature of the target component meets the first preset condition, where the first target feature is at least one feature specified by the user among a plurality of features of the target component.

In a possible implementation, the first target feature includes at least one of processor CPU usage, memory usage, and an I/O throughput.

In a possible implementation, when the first target feature includes the CPU usage, the first preset condition includes: the CPU usage is higher than preset CPU usage; when the first target feature includes the memory usage, the first preset condition includes: the memory usage is higher than preset memory usage; or when the first target feature includes the I/O throughput, the first preset condition includes: the I/O throughput is higher than a preset I/O throughput.

In a possible implementation, the management apparatus further includes an obtaining module and a determining module, where the obtaining module is configured to obtain modularity between the first community and each of other communities than the first community among the plurality of communities, where the modularity is a value used to describe a degree of closeness of a call relationship between communities; the determining module is configured to determine, based on the modularity, whether a target community exists among the other communities, where the target community is a community whose modularity with the first community is greater than a threshold among the other communities; and the creation module is configured to create the second community when the target community does not exist among the other communities.

In a possible implementation, the creation module is configured to create a second community combination when the target community exists among the other communities, where the second community combination is the same as a first community combination including the first community and the target community, the second community combination includes the second community and a third community, the third community is the same as the target community, and the second community combination is used to share a part of load of the first community combination.

In a possible implementation, the determining module is configured to determine a hot point and a hot link based on a call relationship between cloud service components in the first community if the target component does not meet the first preset condition, where the hot point is a cloud service component with a relatively high call frequency among the plurality of cloud service components in the first community, and the hot link is a link with a relatively high call frequency between the plurality of cloud service components; and the determining module is further configured to process the hot point and the hot link based on a preset mitigation policy, where the preset mitigation policy is used to enable the processed hot point and hot link to meet respective current load requirements.

In a possible implementation, the hot point is top N cloud service components with highest popularity values among the plurality of cloud service components included in the first community, where the popularity value is a sum of an out-degree of a cloud service component and an in-degree of the cloud service component, and N is an integer greater than 0; and the hot link is top M links with highest call frequencies among a plurality of links between the plurality of cloud service components included in the first community, where M is an integer greater than 0.

In a possible implementation, the determining module is configured to determine a target hot point mitigation policy from a first target correspondence based on an identifier of a community in which the hot point is located and a second target feature of the hot point, where the first target correspondence includes a correspondence between identifiers of the plurality of communities, a plurality of third preset conditions, and a plurality of hot point mitigation policies, the second target feature is a feature specified in advance by the user among a plurality of features of the hot point, and the third preset condition is used to determine whether to perform capacity expansion on the hot point; and the determining module is further configured to process the hot point based on the target hot point mitigation policy.

In a possible implementation, the hot point mitigation policy includes: reset scaling and/or horizontal scaling.

In a possible implementation, the determining module is configured to determine a target hot link mitigation policy from a second target correspondence based on a third target feature of the hot link, where the second target correspondence includes a correspondence between a plurality of fourth preset conditions and a plurality of hot link mitigation policies, and the third target feature is a feature specified in advance by the user among a plurality of features of the hot link; and the determining module is further configured to process the hot link based on the target hot link mitigation policy.

In a possible implementation, the hot link mitigation policy includes: lateral scaling and/or longitudinal scaling.

In a possible implementation, the determining module is configured to determine a target type template from a plurality of preset type templates based on a distribution feature of the hot point and the hot link, where the distribution feature is used to represent spatial location information of the hot point and the hot link, and the target type template is a type template having a highest degree of matching with the distribution feature among the plurality of preset type templates; and the determining module is further configured to determine, from a correspondence between a plurality of type templates and a plurality of mitigation policies, a target mitigation policy corresponding to the target type template; and process the hot point and the hot link based on the target mitigation policy.

According to a third aspect, this application provides a computing device cluster, including at least one computing device, where each computing device includes a processor and a memory; and the processor of the at least one computing device is configured to execute instructions stored in the memory of the at least one computing device, so that the computing device cluster performs the method according to any one of the first aspect and the possible implementations of the first aspect.

According to a fourth aspect, this application provides a computer-readable storage medium. The computer-readable storage medium stores computer instructions. When the computer instructions are run on a computing device, the computing device is enabled to perform the method according to any one of the first aspect and the possible implementations of the first aspect.

According to a fifth aspect, this application provides a computer program product including instructions. When the computer program product is run on a computer, the computer is enabled to perform the method according to any one of the first aspect and the possible implementations of the first aspect.

It should be understood that for beneficial effects achieved by technical solutions in the second aspect to the fifth aspect and the corresponding possible implementations in this application, refer to the foregoing technical effects in the first aspect and the corresponding possible implementations of the first aspect. Details are not described herein again.

## BRIEF DESCRIPTION OF DRAWINGS

FIG. 1 is a diagram of a cloud platform system according to an embodiment of this application;

FIG. 2 is a first schematic flowchart of a cloud platform management method according to an embodiment of this application;

FIG. 3 is a first diagram of a call relationship graph according to an embodiment of this application;

FIG. 4 is a second diagram of a call relationship graph according to an embodiment of this application;

FIG. 5 is a second schematic flowchart of a cloud platform management method according to an embodiment of this application;

FIG. 6 is a third schematic flowchart of a cloud platform management method according to an embodiment of this application;

FIG. 7 is a diagram for determining a hot point and a hot link according to an embodiment of this application;

FIG. 8 is a fourth schematic flowchart of a cloud platform management method according to an embodiment of this application;

FIG. 9 is a fifth schematic flowchart of a cloud platform management method according to an embodiment of this application;

FIG. 10 is a diagram of a type template according to an embodiment of this application;

FIG. 11 is a diagram of a structure of a management apparatus according to an embodiment of this application;

FIG. 12 is a diagram of a computing device cluster according to an embodiment of this application; and

FIG. 13 is a network connection diagram according to an embodiment of this application.

## DESCRIPTION OF EMBODIMENTS

The term "and/or" in this specification merely describes an association relationship between associated objects and represents that three relationships may exist. For example, A and/or B may represent the following three cases: Only A exists, both A and B exist, and only B exists.

In the specification and claims in embodiments of this application, the terms "first", "second", and the like are intended to differentiate different objects, but do not describe a specific order of the objects. For example, a first community, a second community, and the like are used to differentiate different communities, and are not used to describe a particular order of the communities.

In embodiments of this application, the term "example", "for example", or the like is used to represent an example, an illustration, or a description. Any embodiment or design scheme described as an "example" or "for example" in embodiments of this application should not be construed as being more preferred or advantageous than another embodiment or design scheme. Exactly, use of the term "example" or "for example" or the like is intended to present a relative concept in a specific manner.

In descriptions of embodiments of this application, unless otherwise stated, "a plurality of" means two or more. For example, a plurality of processing units are two or more processing units, and a plurality of systems are two or more systems.

First, some concepts related to a cloud platform management method and an apparatus, a program product, and a storage medium provided in embodiments of this application are described.

Cloud service component: is also referred to as a cloud component or a component. One cloud service includes a plurality of cloud service components, and the plurality of cloud service components provide all services in the cloud service, that is, each cloud service component provides a sub-service for the cloud service. For example, it is assumed that a cloud service A is used to provide a data storage service, and that the cloud service A includes a data cache component and a data persistence component, where the data cache component is configured to provide a service for caching to-be-persisted data, and the data persistence component is configured to provide a service for persisting the cached data. In this case, the service provided by the data cache component and the service provided by the data persistence component together constitute the cloud service A.

When the cloud service component is a MySQL component, the cloud service component is configured to provide a MySQL database service.

Out-degree and in-degree: In a directed graph, an arrow has a direction and points from one vertex to another vertex. In this way, a quantity of arrows pointing to each vertex is an in-degree of the vertex. A quantity of arrows pointing out from this vertex is an out-degree of the vertex. In other words, an in-degree of the cloud service component is a quantity of times of sending data to the cloud service component within a unit time, or a quantity of times of calling the cloud service component; and an out-degree of the cloud service component is a quantity of times of sending data by the cloud service component to another cloud service component within a unit time, or a quantity of times of calling another cloud service component.

Modularity (modularity): is also referred to as a modularity metric, and is a common method for measuring strength of a network community structure, that is, the modularity is a value for measuring a degree of closeness of a community.

Vertical scaling: means enhancing hardware performance of a single machine, for example, increasing a quantity of CPU cores, for example, to 32 cores, upgrading to a better network adapter such as 10 GE, upgrading to a better hard disk such as an SSD, expanding a hard disk capacity, for example, to 2 TB, and expanding a system memory, for example, to 128 GB.

Horizontal scaling: means adding more servers or program instances to distribute load, thereby improving storage and computing capabilities, for example, adding storage devices.

Lateral scaling: means adding more equivalent functional components in parallel to distribute load.

Longitudinal scaling: is a process of increasing a capacity of a given instance, that is, expanding a capacity of a point to process more requests.

As vendors pay more attention to processing capabilities of cloud platforms or cloud services under heavy load pressure, a common method for processing pressure on cloud service components in a cloud platform is provided, including: operation and maintenance personnel monitor an out-degree and an in-degree of each cloud service component in the cloud platform and a data transmission frequency of a link between the cloud service components, and determine, based on experience, whether any hot point and hot link exist in the cloud platform. When a hot point and a hot link exist in the cloud platform, the operation and maintenance personnel perform capacity expansion on the hot point and the hot link based on experience.

For example, a relationship graph including call relationships of a plurality of cloud service components includes a cloud service component A and a cloud service component B. The cloud service component B is configured to store data sent by the cloud service component A. When operation and maintenance personnel determine that the cloud service component A is a hot point, capacity expansion is performed on the cloud service component A, so that the cloud service component A can normally process service data under current load pressure.

However, when load pressure of the cloud platform is relatively high, after capacity expansion is performed only on the cloud service component A as a hot point, although processing efficiency of the cloud service component A is improved, load pressure of the cloud service component B is increased, and consequently, the cloud service component B becomes a new hot point. It can be learned that, in the foregoing method, when the load pressure of the cloud platform is relatively high, the load pressure of the cloud platform cannot be quickly adjusted, resulting in limited performance of the cloud platform.

Based on this, an embodiment of this application provides a cloud platform management method. The method includes: grouping, based on call relationships between a plurality of cloud service components in a cloud platform, the plurality of cloud service components into a plurality of communities including a first community, where a degree of closeness of a call relationship between cloud service components in a community is relatively high, and a degree of closeness of a call relationship between communities is relatively low; and when the first community meets a preset condition, creating a second community same as the first community (for example, cloning the first community to obtain the second community), so that the second community shares a part of load of the first community. Therefore, when load pressure of the cloud platform is relatively high, an entire community including a plurality of cloud service components is cloned. Because a degree of closeness of a call relationship between cloud service components in the entire community is relatively high, load balancing can be performed on the first community and the second community to quickly adjust the load pressure of the cloud platform, thereby improving working performance of the cloud platform.

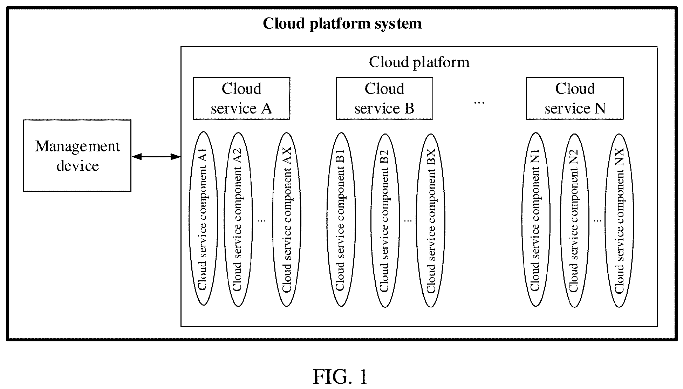

An embodiment of this application provides a cloud platform management method. The method may be applied to a cloud platform system shown in FIG. 1. The cloud platform system includes a cloud platform and a management apparatus.

The cloud platform is configured to provide a powerful computing service for a user. The cloud platform includes N cloud services, and a dependency relationship exists between the N cloud services. One of the N cloud services is used to provide a required service (for example, a storage service or a gateway service) for the cloud platform. Each cloud service includes X cloud service components, a dependency relationship may exist between the plurality of cloud service components, and one of the X cloud service components is configured to provide a sub-service for the cloud service.

It should be noted that any two of the N cloud services may include different quantities of cloud service components.

The management apparatus is configured to perform the cloud platform management method provided in embodiments of this application, to manage the cloud platform, so that when load pressure of the cloud platform is relatively high, the management apparatus quickly reduces load pressure of a cloud service in the cloud platform. The management apparatus performs the cloud platform management method provided in embodiments of this application in S110 to S 140 below. Details are not described herein again.

It should be understood that the management apparatus may be a cloud server in the cloud platform, or may be a cloud server independent of the cloud platform. Specifically, a specific location of the management apparatus is not limited in this embodiment of this application.

It should be noted that a system architecture and an application scenario described in embodiments of this application are intended to describe the technical solutions in embodiments of this application more clearly, and do not constitute any limitation on the technical solutions provided in embodiments of this application. Persons of ordinary skill in the art may know that, with evolution of the system architecture and emergence of a new service scenario, the technical solutions provided in embodiments of this application are also applicable to a similar technical problem.

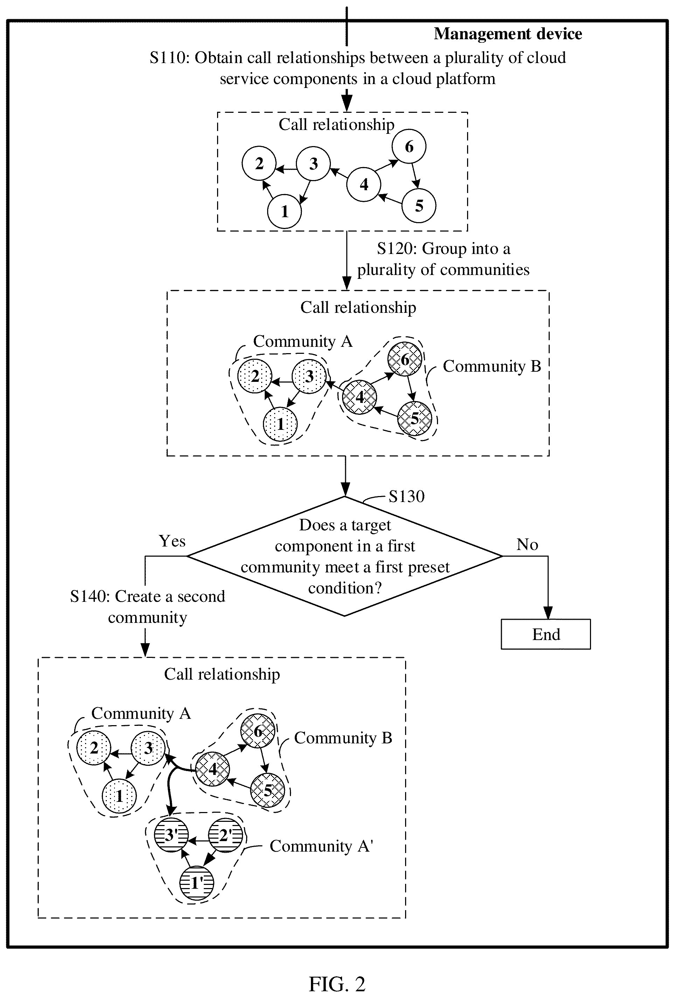

An embodiment of this application provides a cloud platform management method. The method is applied to the management apparatus in the cloud platform system shown in FIG. 1. As shown in FIG. 2, the method includes S110 to S140.

S110: A management apparatus obtains call relationships between a plurality of cloud service components in a cloud platform.

The cloud platform is a cloud platform including a plurality of cloud service components, as shown in FIG. 1, and mutual call relationships exist between the plurality of cloud service components.

The call relationship includes one or more of the following: call information of the plurality of cloud service components, a call frequency of a link between any two of the plurality of cloud service components, and an out-degree and an in-degree of each of the plurality of cloud service components.

The call information includes: an identifier of another cloud service component called by a first component when the first component is a calling component; and an identifier of a cloud service component calling the first component when the first component is a called component, where the first component is any one of the plurality of cloud service components. In other words, the call information includes a correspondence between a calling end and a called end among the plurality of cloud service components. For example, when a cloud service component A calls a cloud service component B, the calling end is the cloud service component A, and the called end is the cloud service component B, that is, the cloud service component A→the cloud service component B.

The call frequency of the link indicates a quantity of times that the link transmits data within a unit time.

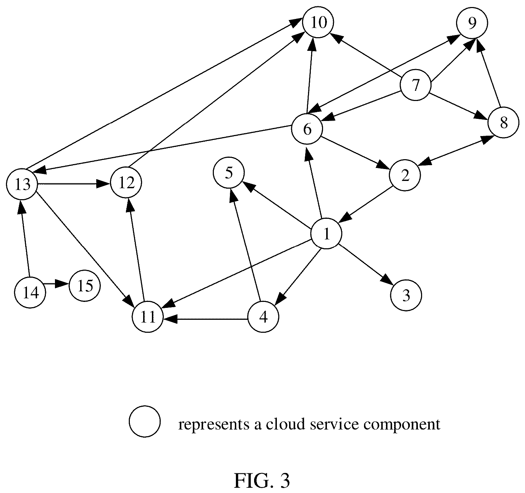

For example, the call relationship may be represented by using a call relationship graph shown in FIG. 3. Each node (for example, ②) in the graph represents a cloud service component (for example, a cloud service component 2). Any node (for example, a node 2 representing the cloud service component 2) in the graph includes an identifier of another cloud service component called when the cloud service component 2 is used as a calling end, for example, ②→①, and an identifier of a cloud service component of a calling end calling the cloud service component 2 when the cloud service component 2 is used as a called end, for example, ⑧→② and ⑥→②; also includes a call frequency of a link between the cloud service component 2 and a cloud service component that has a call relationship with the cloud service component 2, for example, a call frequency of a link 1 between (2) and ⑥; and further includes an out-degree and an in-degree of the cloud service component 2.

It should be noted that a specific implementation process of S110 may be that the management apparatus collects the call relationship from the cloud platform by using a monitoring service (for example, a network management service), or may be that a user pre-imports the call relationship into the management apparatus and then the management apparatus directly obtains the call relationship locally. Specifically, a specific implementation of S110 is not limited in this embodiment of this application.

S120: The management apparatus groups the plurality of cloud service components in the cloud platform into a plurality of communities based on the call relationships between the plurality of cloud service components.

A degree of closeness of a call relationship between cloud service components in any one of the plurality of communities is greater than or equal to a preset degree of closeness, and a degree of closeness between a cloud service component in any one of the plurality of communities and a cloud service component in another one of the plurality of communities is less than the preset degree of closeness. In other words, a degree of closeness of a call relationship between any two of the plurality of communities is less than the preset degree of closeness, where the degree of closeness of the call relationship is used to represent a call frequency between two cloud service components. In other words, among the plurality of cloud service components, cloud service components with a relatively high degree of closeness of a call relationship are grouped into one community; and among the plurality of cloud service components, cloud service components with a relatively low degree of closeness of a call relationship are grouped into different communities.

A specific implementation of S120 may be that the management apparatus groups the plurality of cloud service components into the plurality of communities based on a community discovery algorithm and the call relationships between the plurality of cloud service components; or may be that the management apparatus groups the plurality of cloud service components into the plurality of communities based on a preset training model. Specifically, a specific implementation of S120 is not limited in this embodiment of this application.

It should be noted that, when the foregoing S120 is that the management apparatus groups the plurality of cloud service components into the plurality of communities based on the community discovery algorithm, a specific implementation of S120 includes: using each of the plurality of cloud service components as an independent community; then calculating modularity Q of each of the plurality of communities based on the following formula (1); when it is necessary to determine whether to group a community A and a community B into one community, calculating modularity Q of a community C obtained by grouping the community A and the community B into one community; and when a difference between the modularity Q of the community C and modularity Q of the community A is greater than 0, grouping the community A and the community B into one community; or when a difference between the modularity Q of the community C and modularity Q of the community A is less than or equal to 0, not grouping the community A and the community B into one community. The process is repeated until a value of modularity Q of a community (for example, a community 3) obtained by merging any two communities (for example, a community 1 and a community 2) among the plurality of communities obtained through grouping is greater than modularity Q of the community 1 and modularity Q of the community 2.

$$Q = \sum_{A} \left[ \frac{\sum in}{2m} - \left( \frac{\sum tot}{2m} \right)^2 \right] \ (1)$$

In the formula, m is a sum of weights of all edges in a call network corresponding to the call relationship; $\sum$ in is a sum of weights of all edges between nodes in the community A; and $\sum$ tot is a sum of weights of all edges connected to nodes in the community A, that is, $\sum$ tot is a sum of weights of all edges in the community A (weights of internal edges of the community A for short), and weights of all edges between nodes in other communities and the nodes in the community A (weights of external edges of the community A for short).

It should be noted that a quantity of edges between one node and another node indicates a quantity of calls between the one node and the another node within a unit time.

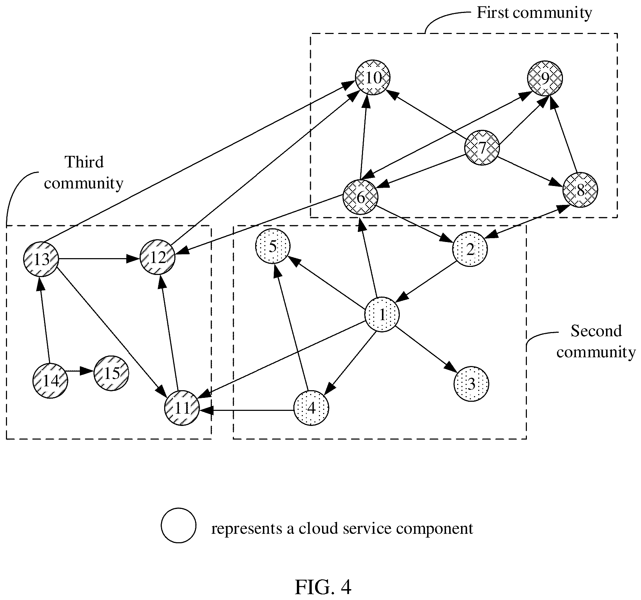

For example, it is assumed that the call network corresponding to the call relationship is shown in FIG. 3. Based on the community discovery algorithm, the call network is divided into three communities. Specifically, as shown in FIG. 4, a node 6 to a node 10 are grouped into a first community, a node 1 to a node 5 are grouped into a second community, and a node 11 to a node 15 are grouped into a third community. A degree of closeness of an edge connection between a plurality of nodes in any one of the three communities is relatively high, and a degree of closeness of an edge connection between any two communities is relatively low.

S130: The management apparatus determines whether a target component in a first community meets a first preset condition.

It should be understood that the first community is any one of the plurality of communities, and that the first community includes a plurality of cloud service components.

It should be noted that heavier load of the first community indicates lower performance of the target component in the first community. Based on this, the first preset condition indicates that performance of the target component is lower than preset performance.

In an implementation, the target component may be a cloud service component that meets a second preset condition among the plurality of cloud service components in the first community, where the second preset condition includes top X cloud service components with highest popularity values among the plurality of cloud service components in the first community, or top M cloud service components with lowest popularity values among the plurality of cloud service components in the first community, where a popularity value of a cloud service component is a sum of an out-degree of the cloud service component and an in-degree of the cloud service component, and both X and M are integers greater than 0. In other words, the management apparatus calculates popularity values of all cloud service components in the first community, and sorts the popularity values; and then determines that the top X cloud service components with the highest popularity values are target components, or determines that the top M cloud service components with the lowest popularity values are target components.

For example, it is assumed that the first community includes five cloud service components: a cloud service component A to a cloud service component E, and that the five cloud service components are sorted in descending order of popularity values as follows: cloud service component B, cloud service component C, cloud service component E, cloud service component D, and cloud service component A. It is also assumed that the second preset condition includes top two cloud service components with the highest popularity values among the plurality of cloud service components in the first community. In this case, the target components are the cloud service component B and the cloud service component C.

In another implementation, the target component is at least one cloud service component specified by the user among the plurality of cloud service components in the first community. In other words, the target component is specified by the user in advance in the first community.

It should be noted that the first preset condition is used to determine whether overall performance of the first community reaches an upper limit.

A specific implementation of S130 includes: the management apparatus determines that a first target feature of the target component meets the first preset condition, where the first target feature is at least one feature specified by the user among a plurality of features of the target component.

In an embodiment, the first target feature includes at least one of processor (central processing unit, CPU) usage, memory usage, and an input/output (input/output, I/O) throughput.

When the first target feature includes the CPU usage, the first preset condition includes: the CPU usage is higher than preset CPU usage (that is, preset first CPU usage). For example, the first preset condition includes that the CPU usage is higher than 90%.

When the first target feature includes the memory usage, the first preset condition includes that the memory usage is higher than preset memory usage (that is, preset first memory usage). For example, the first preset condition includes that the memory usage is higher than 80%.

When the first target feature includes the I/O throughput, the first preset condition includes that the I/O throughput is higher than a preset I/O throughput (that is, a preset first I/O throughput). For example, the first preset condition includes that the memory usage is higher than 500 Mbit/s.

For example, it is assumed that the target component is the cloud service component A, and that the first target feature includes the CPU usage, the memory usage, and the I/O throughput. In this case, the first preset condition includes: the CPU usage is higher than the preset first CPU usage, the memory usage is higher than the preset first memory usage, and the I/O throughput is higher than the preset first I/O throughput. In this case, it is assumed that the preset first CPU usage is 90%, and the preset first memory usage is 80%, and the preset first I/O throughput is 500 Mbit/s; and current CPU usage of the cloud service component A is 80%, and current memory usage of the cloud service component A is 91%, and a current I/O throughput of the cloud service component A is 600 Mbit/s. In this case, because the current CPU usage 80% of the cloud service component A is less than the preset first CPU usage 90%, the target component in the first community does not meet the first preset condition.

When the first community does not meet the first preset condition, it indicates that current load pressure of the first community is relatively low, so that overall performance of the first community is higher than a performance lower limit of the community. Therefore, the management apparatus ends the current method.

When the target component in the first community meets the first preset condition, the management apparatus performs the following S140.

S140: The management apparatus creates a second community.

A call relationship between cloud service components included in the second community is the same as the call relationship between the cloud service components included in the first community. In other words, the second community is the same as the first community, that is, the second community and the first community are the same community.

An implementation of S140 is to obtain the second community by cloning the first community. A specific implementation of S140 includes: the management apparatus obtains an orchestration template of the first community, where the orchestration template includes information such as a component resource type, a relationship between component resources, and the foregoing call relationship, the component resource type includes a resource type (such as a storage resource or a computing resource) required by each of the plurality of cloud service components in the first community, and the relationship between component resources indicates a relationship (for example, a dependency relationship) between resources required by each of the plurality of cloud service components in the first community. Then the management apparatus deploys, by using the orchestration template as a standard, a clone community consistent with the first community, that is, the second community.

It should be noted that the orchestration template may be obtained by the management apparatus after the management apparatus performs S120, obtains information such as the component resource type of the first community, the relationship between component resources, and the call relationship, and stores the information locally as the orchestration template. Alternatively, the orchestration template may be directly obtained by the management apparatus from the first community when the management apparatus performs S140. A format of the orchestration template is generally a JS object notation (java script object notation, JSON) format or an extensible markup language (extensible markup language, XML) format. Specifically, a manner of obtaining the orchestration template is not specifically limited in this embodiment of this application.

It should be noted that the second community is configured to share a part of load of the first community. The second community may be specifically configured to share a part of load of some cloud service components in the first community, or the second community may be specifically configured to share a part of load of all the cloud service components in the first community. This is specifically determined by the call relationship in the first community and a load balancing policy.

It should be understood that the second community is completely consistent with the first community. Based on the load balancing policy, the second community is configured to share a part of load of the first community. For example, it is assumed that the load balancing policy is a polling policy, the second community shares half of the load of the first community.

For example, it is assumed that the first community includes the cloud service component A to the cloud service component C, where the cloud service component A calls the cloud service component B, and the cloud service component B calls the cloud service component C, that is, the cloud service component A→the cloud service component B→the cloud service component C. In this case, when the cloud service component D outside the first community (for example, in a third community) calls the cloud service component B, because the cloud service component B calls the cloud service component C but does not call the cloud service component A, in this scenario, when the cloud service component D sends a plurality of groups of data to the cloud service component B, a cloud service component B' and a cloud service component C' in the second community share a part of load of the cloud service component B and the cloud service component C based on the load balancing policy.

For another example, based on the foregoing example, the first community includes the cloud service component A→the cloud service component B→the cloud service component C. In this case, when the cloud service component D outside the first community (for example, in the third community) calls the cloud service component A, because the cloud service component A calls the cloud service component B, and the cloud service component B calls the cloud service component C, in this scenario, when the cloud service component D sends a plurality of groups of data to the cloud service component A, a cloud service component A', the cloud service component B', and the cloud service component C' in the second community share a part of load of the cloud service component A, the cloud service component B, and the cloud service component C in the first community based on the load balancing policy.

In an embodiment, when overall performance of the first community and the second community is lower than a condition preset by the user, the management apparatus releases the first community or the second community, thereby saving available resources in the cloud platform. For a specific method for releasing the first community or the second community, refer to the conventional technology. Details are not described herein again.

Based on this, an embodiment of this application provides a cloud platform management method. The method includes: grouping, based on call relationships between a plurality of cloud service components in a cloud platform, the plurality of cloud service components into a plurality of communities including a first community, where a degree of closeness of a call relationship between cloud service components in a community is relatively high, and a degree of closeness of a call relationship between communities is relatively low; and when the first community meets a preset condition, creating a second community same as the first community (for example, cloning the first community to obtain the second community), so that the second community shares a part of load of the first community. Therefore, when load pressure of the cloud platform is relatively high, an entire community including a plurality of cloud service components is cloned. Because a degree of closeness of a call relationship between cloud service components in the entire community is relatively high, load balancing can be performed on the first community and the second community to quickly adjust the load pressure of the cloud platform, thereby improving working performance of the cloud platform.

It should be noted that a call relationship exists between communities. When a degree of closeness of a call relationship between one community (for example, the first community) and another community is relatively high, capacity expansion performed only on the first community may cause excessively heavy load pressure on the another community, and consequently, effect of mitigating the load pressure on the entire cloud platform is relatively poor.

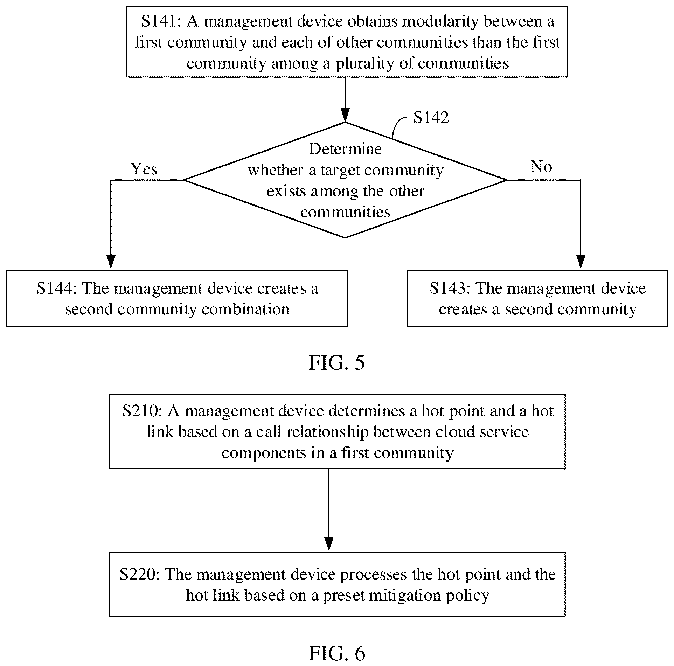

Based on this, in an embodiment, with reference to FIG. 2, as shown in FIG. 5, a specific implementation of S140 further includes S141 to S144.

S141: The management apparatus obtains modularity between the first community and each of other communities than the first community among the plurality of communities.

Modularity is a value used to describe a degree of closeness of a call relationship between a cloud service component in one community and a cloud service component in another community. In other words, modularity is a value used to describe a degree of closeness of a call relationship between communities.

It should be noted that, a specific implementation of S141 may be that after performing S120, the management apparatus stores modularity between any one of the plurality of communities and another community, and when performing S141, the management apparatus directly obtains modularity between the first community and another community locally. Alternatively, a specific implementation of S141 may be that the management apparatus calculates modularity between the first community and each of the other communities based on the foregoing formula (1). Specifically, a specific implementation of S141 is not limited in this embodiment of this application.

It should be noted that, when a specific implementation of S141 is that the management apparatus calculates the modularity between the first community and each of the other communities based on the foregoing formula (1), for a specific calculation process, refer to related descriptions of S120. Details are not described herein again.

S142: The management apparatus determines, based on the modularity between the first community and each of the other communities, whether a target community exists among the other communities.

The target community is a community whose modularity with the first community is greater than a threshold among the other communities, that is, a degree of closeness of a call relationship between the target community and the first community is greater than the threshold. In other words, the target community is a community whose degree of closeness of a call relationship with the first community is relatively high among the other communities.

For example, it is assumed that the plurality of communities include four communities: the first community to a fourth community, where modularity between the first community and the second community is 0.6, modularity between the first community and the third community is 0.2, modularity between the first community and the fourth community is 0.3, and the threshold is 0.55. In this case, because the modularity 0.6 between the first community and the second community is greater than the threshold 0.55, it is determined that the second community is the target community.

When the target community does not exist among the other communities, the following S143 is performed.

When the target community exists among the other communities, the following S144 is performed.

S143: The management apparatus creates the second community.

It should be noted that an implementation of S143 is consistent with an implementation of S140. For detailed descriptions of S143, refer to the related descriptions of S140. Details are not described herein again.

S144: The management apparatus creates a second community combination.

A specific implementation of S144 includes: obtaining the second community combination by cloning a first community combination including the first community and the target community.

The second community combination is the same as the first community combination including the first community and the target community. In other words, the second community combination is a clone combination of the first community combination.

The second community combination includes the second community and the third community, where the second community is a clone community of the first community, and the third community is a clone community of the target community. In other words, a specific implementation of S144 is to clone the first community and the target community as an entire community to obtain the second community combination.

It should be understood that a call relationship between the second community and the third community in the second community combination is consistent with a call relationship between the first community and the target community in the first community combination.

It should be noted that the second community combination is used to share a part of load of the first community combination. The second community combination may be specifically used to share a part of load of some cloud service components in the first community combination, or may be used to share a part of load of all cloud service components in the first community combination. A specific sharing manner is similar to the sharing manner in S140. For details, refer to related descriptions of S140. Details are not described herein again.

It should be noted that an implementation of S144 is similar to an implementation of S140. For detailed descriptions of S144, refer to the related descriptions of S140. Details are not described herein again.

In this embodiment of this application, it is determined whether the target community whose modularity with the first community is greater than the threshold exists among the plurality of communities; and when the target community exists (that is, a community whose degree of closeness of a call relationship with the first community is relatively high exists), the first community and the target community are used as an entire community (that is, the first community combination), and the second community combination that includes the second community and the third community and that is the same as the first community combination is created, where the second community combination is used to share load of the first community combination, so as to resolve a problem that load pressure of the target community is excessively high because capacity expansion is performed only on the first community, and further improve effectiveness of reducing the load pressure of the cloud platform.

It should be noted that, in S130 and S140, when the target component in the first community meets the first preset condition, capacity expansion is performed at a community level (that is, capacity expansion is performed by cloning a community). When the target component in the first community does not meet the first preset condition, load of at least one cloud service component and link in the first community may be relatively heavy, and in severe cases, the entire cloud platform may break down.

Based on this, in an embodiment, when the management apparatus determines that the target component in the first community does not meet the first preset condition in S130, as shown in FIG. 6, the method further includes S210 and S220.

S210: The management apparatus determines a hot point and a hot link based on a call relationship between cloud service components in the first community.

The hot point is a cloud service component with a relatively high call frequency (that is, a popularity value) among the plurality of cloud service components in the first community, where a popularity value of a cloud service component is a sum of an out-degree of the cloud service component and an in-degree of the cloud service component. The hot link a link with a relatively high call frequency between the plurality of cloud service components in the first community.

In an example, a manner of determining the hot point and the hot link is as follows:

A formula for determining the hot point in the first community is shown in the following formula (2):

$$\text{Node} = \max\{\textstyle\sum_{j=1}^{x} rij + \sum_{i=1}^{x} rji\} \qquad (2)$$

In the formula, Node is a hot point; max represents a maximum value; rij represents a quantity of times that a node i (that is, a cloud service component i) calls a node j; and x is a total quantity of nodes (that is, cloud service components) in the first community.

The hot link is a link with a relatively high call frequency between the plurality of cloud service components in the first community. A formula for determining the hot link is shown in the following formula (3):

$$\text{Link} = \max\{\textstyle\sum_{i=1,j=1}^{x} rij\} \qquad (3)$$

In the formula, Link is a hot link; max represents a maximum value; rij represents a quantity of times that the node i calls the node j, that is, a call frequency of the link used when the node i calls the node j; and x is the total quantity of nodes in the first community.

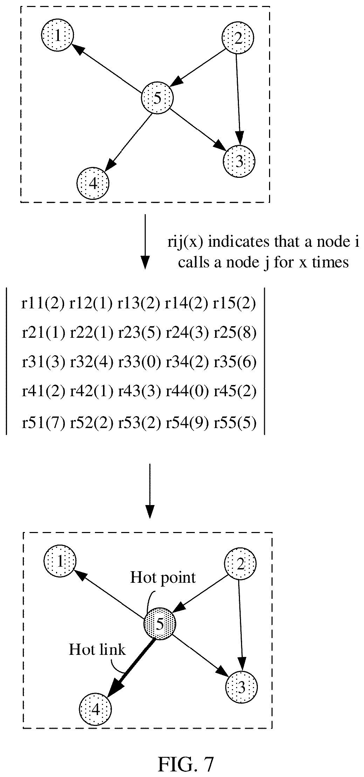

For example, in matrix data corresponding to the first community shown in FIG. 7, rij(x) indicates that the node i calls the node j for x times. The first community includes five nodes, and each node represents one cloud service component. Call data of the five nodes specifically includes {r11(2), r12(1), r13(2), r14(2), r15(2)}, {r21(1), r22(1), r23(5), r24(3), r25(8)}, {r31(3), r32(4), r33(0), r34(2), r35(6)}, {r41(2), r42(1), r43(3), r44(0), r45(2)}, and {r51(7), r52(2), r53(2), r54(9), r55(5)}. Popularity values of a node 1 to a node 5 are calculated separately based on the foregoing formula (2), and the obtained popularity values of the node 1 to the node 5 are 22, 26, 27, 24, and 43 in sequence. In other words, it is determined that the node 5 with a highest popularity value is a hot point, and it is determined that a link corresponding to r54 with a highest call frequency is a hot link.

In another example, a specific implementation of S210 includes S1 to S3.

S1: The management apparatus obtains respective popularity values of the plurality of cloud service components in the first community and call frequencies of a plurality of links between the plurality of cloud service components.

It should be noted that the management apparatus obtains the respective popularity values of the plurality of cloud service components through calculation based on the foregoing formula (2); and the management apparatus determines the call frequencies of the plurality of links based on the call relationships of the cloud service components in the first community.

S2: The management apparatus determines that top N cloud service components with highest popularity values are hot points.

N is a preset integer greater than 0.

For example, based on the example of S210, it is assumed that when N is 2, because the popularity values of the node 1 to the node 5 are 22, 26, 27, 24, and 43 in sequence, the management apparatus determines that the node 5 and the node 3 are hot points.

S3: The management apparatus determines that top M links with highest call frequencies are hot links.

M is a preset integer greater than 0.

For example, based on the example of S210, assuming that M is 2, in this case, the management apparatus determines that links (r54 for short) corresponding to r54 and r15 are hot links.

It should be noted that, after determining the hot point and the hot link in the first community, the management apparatus may mark the hot point and the hot link in the call network corresponding to the first community, so that when viewing the call network, the user can intuitively learn a distribution status of the hot point and the hot link in the first community, thereby improving user experience.

S220: The management apparatus processes the hot point and the hot link based on a preset mitigation policy.

The preset mitigation policy is used to enable the processed hot point and hot link to meet respective current load requirements. In other words, the preset mitigation policy is a method for reducing load pressure of the hot point and the hot link.

S220 includes two specific implementations, which are specifically as follows:

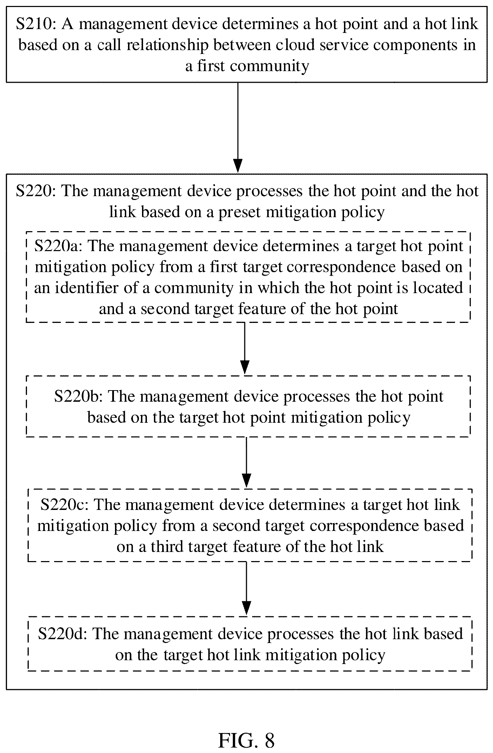

In an implementation, as shown in FIG. 8, a specific implementation of S220 includes S220a to S220d.

S220a: The management apparatus determines a target hot point mitigation policy from a first target correspondence based on an identifier of a community in which the hot point is located and a second target feature of the hot point.

The second target feature is a feature specified in advance by the user among a plurality of features of the hot point, and the second target feature includes at least one of CPU usage, memory usage, and an I/O throughput.

It should be understood that the second target feature is a feature specified in advance by the user among the plurality of features of the hot point based on a specific function (that is, a service type provided for the cloud platform) of the hot point. For example, when the hot point is a cloud service component used to store data, the second target feature may include storage space usage. For another example, when the hot point is a cloud service component used for data calculation, the second target feature may include CPU usage.

It should be noted that in this embodiment of this application, an example in which the second target feature includes the CPU usage, the memory usage, and the I/O throughput is used for description. Details are not described subsequently.

The first target correspondence includes a correspondence between identifiers of the plurality of communities, a plurality of third preset conditions, and a plurality of hot point mitigation policies. The first target correspondence is shown in Table 1, and the identifiers of the plurality of communities include the first community and the second community. The plurality of third preset conditions include: "CPU usage > preset second CPU usage, memory usage > preset second memory usage, and I/O throughput > preset second I/O throughput"; "CPU usage > preset third CPU usage, memory usage > preset third memory usage, and I/O throughput > preset third I/O throughput"; and "CPU usage > preset fourth CPU usage, and I/O throughput > preset fourth I/O throughput". The plurality of hot point mitigation policies include vertical scaling and horizontal scaling. The third preset condition is a condition that the second target feature needs to meet, and the third preset condition is used to determine whether to expand a capacity of the hot point.

Table 1

| Community identifier | Third preset condition | Hot point mitigation policy |
|---|---|---|
| First community | CPU usage > preset second CPU usage, memory usage > preset second memory usage, and ImplementationI/O throughput > preset second I/O throughput | Horizontal scaling |
| First community | CPU usage > preset third CPU usage, memory usage > preset third memory usage, and ImplementationI/O throughput > preset third I/O throughput | Vertical scaling |
| Second community | CPU usage > preset fourth CPU usage, and ImplementationI/O throughput > preset fourth I/O throughput | Vertical scaling |

The vertical scaling is to provide concurrency by improving hardware performance of a single machine, and is specifically to increase a quantity of CPUs in the hot point, and/or increase a capacity of memory in the hot point (for example, add a memory module), and/or add a data bus of the hot point.

The horizontal scaling is to increase a quantity of cloud service components represented by the hot point, and reduce load pressure of the hot point by using a load balancing policy. For example, when the hot point is a cloud service component A, a quantity of cloud service components A is increased.

It should be noted that, for specific implementations of the vertical scaling and the horizontal scaling, refer to the conventional technology. Details are not described herein again.

The identifier of the community corresponding to the target hot point mitigation policy is consistent with the identifier of the first community in which the hot point is located, and the second target feature of the hot point meets the third preset condition corresponding to the target hot point mitigation policy.

For example, assuming that the identifier of the community in which the hot point is located is the first community, CPU usage of the hot point > preset third CPU usage, memory usage > preset third memory usage, and I/O throughput > preset third I/O throughput. In this case, the target hot point mitigation policy of the hot point is vertical scaling.

S220b: The management apparatus processes the hot point based on the target hot point mitigation policy.

For example, based on the example in S220a, performing vertical scaling on the hot point specifically includes: increasing a quantity of CPUs of the hot point, increasing a memory storage capacity of the hot point, and increasing a quantity of data buses of the hot point.

S220c: The management apparatus determines a target hot link mitigation policy from a second target correspondence based on a third target feature of the hot link.

The third target feature is a feature specified in advance by the user among a plurality of features of the hot link. For example, the third target feature includes a data transmission success rate and an I/O throughput.

It should be noted that in this embodiment of this application, an example in which the third target feature includes the I/O throughput is used for description. Details are not described subsequently.

A fourth preset condition is a condition that the third target feature needs to meet, and the fourth preset condition is used to determine whether to perform scaling on the hot link.

The second target correspondence includes a correspondence between a plurality of fourth preset conditions and a plurality of hot link mitigation policies. Specifically, as shown in Table 2, the plurality of fourth preset conditions include: "ImplementationI/O throughput > 600 Mbit/s, and I/O throughput $\geq$ 400 Mbit/s" and "ImplementationI/O throughput > 400 Mbit/s". The plurality of hot link mitigation policies include lateral scaling and longitudinal scaling.

Table 2

| Fourth preset condition | Hot link mitigation policy |
|---|---|
| ImplementationI/O throughput > 600 Mbit/s, and I/O throughput $\geq$ 400 Mbit/s | Lateral scaling |
| ImplementationI/O throughput > 400 Mbit/s | Longitudinal scaling |

The lateral scaling may be specifically increasing a quantity of links, so that a part of load of the hot link is shared by added links.

The longitudinal scaling may be specifically increasing a bandwidth of the hot link to increase an amount of data that can be transmitted by the hot link.

A specific implementation of S220c includes: the management apparatus determines a hot link mitigation policy corresponding to a fourth preset condition that the third target feature of the hot link meets as the target hot link mitigation policy.

For example, assuming that a current I/O throughput of the hot link is 550 Mbit/s, in this case, it is determined that the hot link mitigation policy (that is, lateral scaling) corresponding to the fourth preset condition including ImplementationI/O throughput > 600 Mbit/s and I/O throughput $\geq$ 400 Mbit/s is the target hot link mitigation policy.

S220d: The management apparatus processes the hot link based on the target hot link mitigation policy.

For example, based on the example in S220c, the target hot link mitigation policy is lateral scaling, and a quantity of hot links is increased, so that added links share a part of load of the hot link.

In the foregoing embodiment, when the target component in the first community does not meet the first preset condition, the hot point and the hot link in the first community are determined; and then the target hot point mitigation policy is determined based on the community in which the hot point is located and the third preset condition that the second target feature of the hot point meets, and the hot point is processed based on the target hot point mitigation policy, so that load pressure of the hot point is mitigated. Similarly, the management apparatus determines that the hot link mitigation policy corresponding to the fourth preset condition that the third target feature of the hot link meets is the target hot link mitigation policy, and processes the hot link based on the target hot link mitigation policy, to reduce load pressure of the processed hot link, thereby resolving a problem that the cloud platform breaks down due to relatively heavy load of at least one cloud service component and link in the first community.

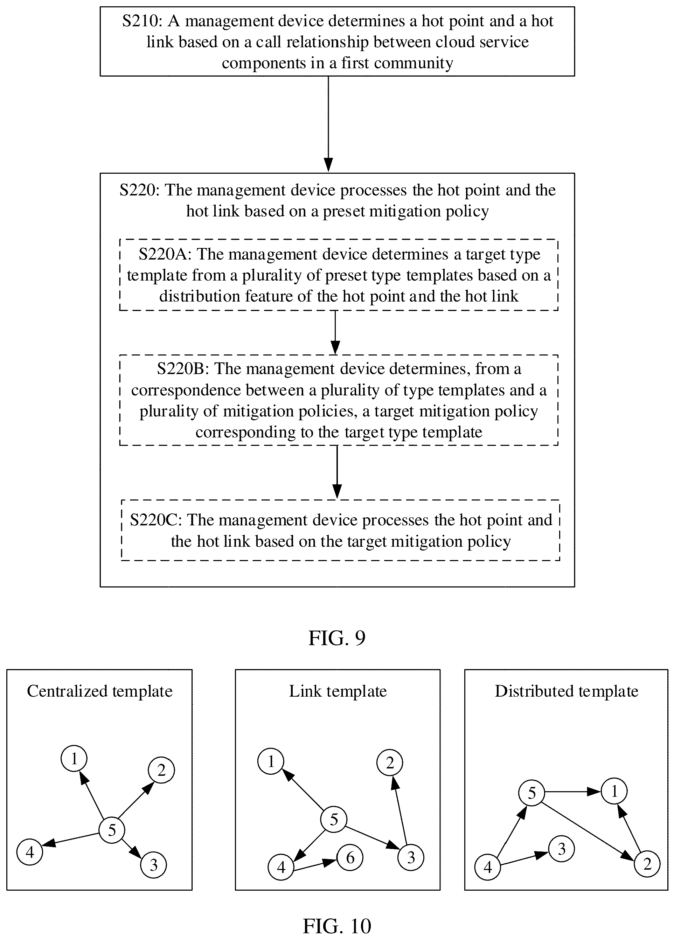

In another implementation, as shown in FIG. 9, a specific implementation of S220 includes S220A to S220C.

S220A: The management apparatus determines a target type template from a plurality of preset type templates based on a distribution feature of the hot point and the hot link.

The distribution feature of the hot point and the hot link is used to represent spatial location information of the hot point and the hot link in the first community. In other words, the distribution feature indicates location information of the hot point and the hot link in the first community.

Respective features of nodes and links in any two types of templates among the plurality of preset type templates are different, and the target type template is a type template having a highest degree of matching with the distribution feature of the hot point and the hot link among the plurality of preset type templates.

A specific implementation of S220A includes: the management apparatus separately calculates, based on the distribution feature of the hot point and the hot link, a degree of matching with each preset type template; and then the management apparatus determines that a type template with a highest degree of matching is the target type template.

It should be noted that the management apparatus may calculate, based on a training model, a degree of matching between the distribution feature of the hot point and the hot link and each preset type template. Alternatively, the management apparatus may calculate, based on another existing algorithm, a degree of matching between the distribution feature of the hot point and the hot link and each preset type template. Specifically, a specific implementation of S220A is not limited in this embodiment of this application.

S220B: The management apparatus determines, from a correspondence between a plurality of type templates and a plurality of mitigation policies, a target mitigation policy corresponding to the target type template.

The plurality of type templates include a plurality of different types of templates, for example, a centralized template and a distributed template.

The correspondence is shown in Table 3. The plurality of type templates include a type template 1, a type template 2, and a type template 3. The plurality of mitigation policies include: expanding the capacity of the hot point, expanding the capacity of the hot point and the capacity of the hot link, and expanding the capacity of the hot link.

Table 3

| Type template | Mitigation policy |
|---|---|
| Type template 1 | Expanding the capacity of the hot point |
| Type template 2 | Expanding the capacity of the hot point and the capacity of the hot link |
| Type template 3 | Expanding the capacity of the hot link |

It should be noted that a specific manner of expanding the capacity of the hot point may be vertical scaling or horizontal scaling, and that a specific manner of expanding the capacity of the hot link may be longitudinal scaling or lateral scaling. Specifically, the specific manner of expanding the capacity of the hot point and the specific manner of expanding the capacity of the hot link are not limited in this embodiment of this application.

For example, the type template 1 in Table 3 is a centralized template in FIG. 10, the type template 2 is a link template in FIG. 10, and the type template 3 is a distributed template in FIG. 10. When the target type template is the centralized template, it is determined that the target mitigation policy is expanding the capacity of the hot point.

S220C: The management apparatus processes the hot point and the hot link based on the target mitigation policy.

In the foregoing embodiment, when the target component in the first community does not meet the first preset condition, the hot point and the hot link in the first community are determined; and then the management apparatus determines the target type template from the plurality of preset type templates based on the distribution feature of the hot point and the hot link, and processes the hot point and the hot link based on the target mitigation policy corresponding to the target type template, to reduce load pressure of the processed hot point and hot link, thereby resolving a problem that the cloud platform breaks down due to relatively heavy load of at least one cloud service component and link in the first community.

The foregoing mainly describes the solutions provided in embodiments of this application from the perspective of the method. To implement the foregoing functions, the management apparatus includes corresponding hardware structures and/or software modules for performing the functions. Persons skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. Persons skilled in the art may use different methods to implement the described functions for each particular application, but it should not be considered that the implementation goes beyond the scope of this application.

In embodiments of this application, the management apparatus may be divided into functional modules based on the foregoing method examples. For example, the management apparatus may include each functional module obtained through division based on each corresponding function, or two or more functions may be integrated into one processing module. The integrated module may be implemented in a form of hardware, or may be implemented in a form of a software functional module. It should be noted that the module division in embodiments of this application is an example, and is merely logical function division. There may be another division manner during actual implementation.

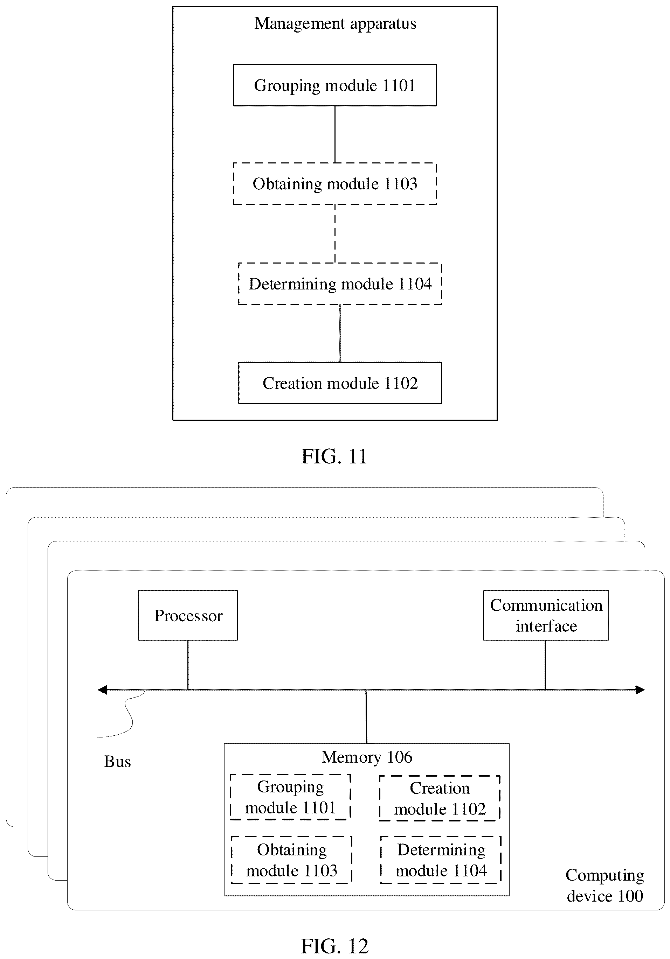

When functional modules are obtained through division based on corresponding functions, FIG. 11 is a diagram of a possible structure of the management apparatus in the foregoing embodiment. As shown in FIG. 11, the management apparatus includes a grouping module 1101 and a creation module 1102.

The grouping module 1101 is configured to group a plurality of cloud service components in a cloud platform into a plurality of communities based on call relationships between the plurality of cloud service components, for example, perform step S120 in the foregoing method embodiment.

The creation module 1102 is configured to create a second community if a target component in a first community of the plurality of communities meets a first preset condition, for example, perform step S140 in the foregoing method embodiment.

Optionally, the grouping module 1101 is configured to group the plurality of cloud service components into the plurality of communities based on a community discovery algorithm and the call relationships.

Optionally, the creation module 1102 is configured to create the second community if a first target feature of the target component meets the first preset condition.

Optionally, the management apparatus further includes an obtaining module 1103 and a determining module 1104.

The obtaining module 1103 is configured to obtain modularity between the first community and each of other communities than the first community among the plurality of communities, for example, perform step S141 in the foregoing method embodiment.

The determining module 1104 is configured to determine, based on the modularity, whether a target community exists among the other communities, for example, perform step S142 in the foregoing method embodiment.

The creation module 1102 is configured to create the second community when the target community does not exist among the other communities, for example, perform step S 143 in the foregoing method embodiment.

Optionally, the creation module 1102 is further configured to create a second community combination when the target community exists among the other communities, for example, perform step S144 in the foregoing method embodiment.

Optionally, the determining module 1104 is configured to determine a hot point and a hot link based on a call relationship between cloud service components in the first community if the target component does not meet the first preset condition, for example, perform step S210 in the foregoing method embodiment; and the determining module 1104 is further configured to process the hot point and the hot link based on a preset mitigation policy, for example, perform step S220 in the foregoing method embodiment.

Optionally, the determining module 1104 is configured to determine a target hot point mitigation policy from a first target correspondence based on an identifier of a community in which the hot point is located and a second target feature of the hot point, for example, perform step S220a in the foregoing method embodiment; and
the determining module 1104 is configured to process the hot point based on the target hot point mitigation policy, for example, perform step S220b in the foregoing method embodiment.

Optionally, the determining module 1104 is configured to determine a target hot link mitigation policy from a second target correspondence based on a third target feature of the hot link, for example, perform step S220c in the foregoing method embodiment; and
the determining module 1104 is further configured to process the hot link based on the target hot link mitigation policy, for example, perform step S220d in the foregoing method embodiment.

Optionally, the determining module 1104 is configured to determine a target type template from a plurality of preset type templates based on a distribution feature of the hot point and the hot link, for example, perform step S220A in the foregoing method embodiment;

the determining module 1104 is configured to determine, from a correspondence between a plurality of type templates and a plurality of mitigation policies, a target mitigation policy corresponding to the target type template, for example, perform step S220B in the foregoing method embodiment; and
the determining module 1104 is further configured to process the hot point and the hot link based on the target mitigation policy, for example, perform step S220C in the foregoing method embodiment.

The grouping module 1101, the creation module 1102, the obtaining module 1103, and the determining module 1104 may all be implemented by using software, or may be implemented by using hardware. For example, the following uses the grouping module 1101 as an example to describe an implementation of the grouping module 1101. Similarly, for implementations of the creation module 1102, the obtaining module 1103, and the determining module 1104, refer to the implementation of the grouping module 1101.

A module is used as an example of a software functional unit, and the grouping module 1101 may include code run on a computing instance. The computing instance may include at least one of a physical host (computing device), a virtual machine, and a container. Further, there may be one or more computing instances. For example, the grouping module 1101 may include code run on a plurality of hosts, virtual machines, or containers. It should be noted that the plurality of hosts, virtual machines, or containers configured to run the code may be distributed in a same region (region), or may be distributed in different regions. Further, the plurality of hosts, virtual machines, or containers configured to run the code may be distributed in a same availability zone (availability zone, AZ), or may be distributed in different AZs. Each AZ includes one data center or a plurality of data centers that are geographically close to each other. Usually, one region may include a plurality of AZs.

Similarly, the plurality of hosts, virtual machines, or containers configured to run the code may be distributed in a same virtual private cloud (virtual private cloud, VPC), or may be distributed in a plurality of VPCs. Usually, one VPC is arranged in one region. For cross-region communication between two VPCs in a same region and between VPCs in different regions, a communication gateway needs to be arranged in each of the VPCs, and interconnection between the VPCs is implemented through the communication gateway.

A module is used as an example of a hardware functional unit, and the grouping module 1101 may include at least one computing device, for example, a server. Alternatively, the grouping module 1101 may be a device implemented by using an application-specific integrated circuit (application-specific integrated circuit, ASIC) or a programmable logic device (programmable logic device, PLD), or the like. The PLD may be implemented by a complex programmable logic device (complex programmable logic device, CPLD), a field-programmable gate array (field-programmable gate array, FPGA), generic array logic (generic array logic, GAL), or any combination thereof.

A plurality of computing devices included in the grouping module 1101 may be distributed in a same region, or may be distributed in different regions. The plurality of computing devices included in the grouping module 1101 may be distributed in a same AZ, or may be distributed in different AZs. Similarly, the plurality of computing devices included in the grouping module 1101 may be distributed in a same VPC, or may be distributed in a plurality of VPCs. The plurality of computing devices may be any combination of computing devices such as a server, an ASIC, a PLD, a CPLD, an FPGA, and a GAL.

It should be noted that in another embodiment, the grouping module 1101 may be configured to perform any step in the foregoing cloud platform management method; the creation module 1102 may be configured to perform any step in the foregoing cloud platform management method; the obtaining module 1103 may be configured to perform any step in the foregoing cloud platform management method; and the determining module 1104 may be configured to perform any step in the foregoing cloud platform management method. The steps implemented by the grouping module 1101, the creation module 1102, the obtaining module 1103, and the determining module 1104 may be specified as required. The grouping module 1101, the creation module 1102, the obtaining module 1103, and the determining module 1104 respectively implement different steps in the foregoing cloud platform management method to implement all functions of the management apparatus.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

As shown in FIG. 12, the computing device cluster includes at least one computing device 100. A memory or memories 106 in one or more computing devices 100 in the computing device cluster may store same instructions for performing the foregoing cloud platform management method.

In some possible implementations, alternatively, a memory or memories 106 in one or more computing devices 100 in the computing device cluster each may store a part of instructions for performing the foregoing cloud platform management method. In other words, a combination of the one or more computing devices 100 may jointly execute instructions used to perform the foregoing cloud platform management method.

It should be noted that memories 106 in different computing devices 100 in the computing device cluster may store different instructions respectively used to perform some functions of the management apparatus. In other words, instructions stored in the memories 106 in different computing devices 100 may implement functions of one or more of the grouping module 1101, the creation module 1102, the obtaining module 1103, and the determining module 1104.

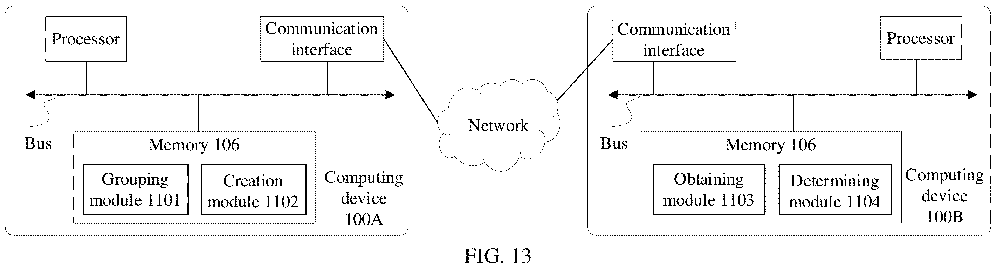

In some possible implementations, the one or more computing devices in the computing device cluster may be connected through a network. The network may be a wide area network, a local area network, or the like. FIG. 13 shows a possible implementation. As shown in FIG. 13, two computing devices 100A and 100B are connected through a network. Specifically, each computing device is connected to the network through a communication interface of the computing device. In this possible implementation, a memory 106 in the computing device 100A stores instructions for executing functions of the grouping module 1101 and the creation module 1102. In addition, a memory 106 in the computing device 100B stores instructions for performing functions of the obtaining module 1103 and the determining module 1104.

A requirement for obtaining modularity between a first community and each of other communities than the first community among a plurality of communities and determining a target community among the other communities in a cloud platform management method provided in this application may be considered for a connection manner between computing device clusters shown in FIG. 13. Therefore, it is considered that functions implemented by the obtaining module 1103 and the determining module 1104 are performed by the computing device 100B.

It should be understood that functions of the computing device 100A shown in FIG. 13 may also be completed by a plurality of computing devices 100. Similarly, functions of the computing device 100B may also be completed by a plurality of computing devices 100.

An embodiment of this application further provides another computing device cluster. For a connection relationship between computing devices in the computing device cluster, refer to the connection manner in the computing device cluster in FIG. 4 and FIG. 5 similarly. A difference lies in that a memory or memories 106 in one or more computing devices 100 in the computing device cluster may store same instructions for performing the cloud platform management method.

In some possible implementations, alternatively, a memory or memories 106 in one or more computing devices 100 in the computing device cluster each may store a part of instructions for performing the cloud platform management method. In other words, a combination of the one or more computing devices 100 may jointly execute instructions used to perform the cloud platform management method.

An embodiment of this application further provides a computer program product including instructions. The computer program product may be a software or program product that includes instructions and that can be run on a computing device or be stored in any usable medium. When the computer program product is run on at least one computing device, the at least one computing device is enabled to perform the cloud platform management method.

An embodiment of this application further provides a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions. The instructions instruct a computing device to perform a cloud platform management method.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of the present invention.

## Claims

1. A cloud platform management method, comprising:

   grouping a plurality of cloud service components in a cloud platform into a plurality of communities based on call relationships between the plurality of cloud service components, wherein each community comprises at least two of the plurality of cloud service components, a degree of closeness of a call relationship between cloud service components comprised in each community is greater than or equal to a preset degree of closeness, and a degree of closeness between a cloud service component in any one of the plurality of communities and a cloud service component in another one of the plurality of communities is less than the preset degree of closeness; and
   if a target component in a first community of the plurality of communities meets a first preset condition, creating a second community, wherein the second community is the same as the first community, the second community is configured to share a part of load of the first community, the first preset condition indicates that performance of the target component is lower than preset performance, the first community is any one of the plurality of communities, and the target component is at least one of a plurality of cloud service components in the first community.

2. The method according to claim 1, wherein the call relationship comprises one or more of the following:
   call information of the plurality of cloud service components in the cloud platform, a call frequency of a link between any two of the plurality of cloud service components in the cloud platform, and an out-degree and an in-degree of any one of the plurality of cloud service components in the cloud platform.

3. The method according to claim 1 or 2, wherein grouping the plurality of cloud service components in the cloud platform into the plurality of communities based on the call relationships between the plurality of cloud service components comprises:
   grouping the plurality of cloud service components into the plurality of communities based on a community discovery algorithm and the call relationships.

4. The method according to any one of claims 1 to 3, wherein
   the target component comprises: a cloud service component that meets a second preset condition among the plurality of cloud service components in the first community, or at least one cloud service component specified by a user among the plurality of cloud service components in the first community.

5. The method according to claim 4, wherein the second preset condition comprises top X cloud service components with highest popularity values among the plurality of cloud service components in the first community, wherein the popularity value is a sum of an out-degree of a cloud service component and an in-degree of the cloud service component, and X is an integer greater than 0.

6. The method according to any one of claims 1 to 5, wherein creating the second community if the target component in the first community of the plurality of communities meets the first preset condition comprises:
if a first target feature of the target component meets the first preset condition, creating the second community, wherein the first target feature is at least one feature specified by the user among a plurality of features of the target component.

7. The method according to claim 6, wherein
the first target feature comprises at least one of CPU usage, memory usage, and an I/O throughput.

8. The method according to claim 7, wherein

when the first target feature comprises the CPU usage, the first preset condition comprises: the CPU usage is higher than preset CPU usage;
when the first target feature comprises the memory usage, the first preset condition comprises: the memory usage is higher than preset memory usage; or
when the first target feature comprises the I/O throughput, the first preset condition comprises: the I/O throughput is higher than a preset I/O throughput.

9. The method according to any one of claims 1 to 8, wherein when creating the second community, the method further comprises:

obtaining modularity between the first community and each of other communities than the first community among the plurality of communities, wherein the modularity is a value used to describe a degree of closeness of a call relationship between communities;
determining, based on the modularity, whether a target community exists among the other communities, wherein the target community is a community whose modularity with the first community is greater than a threshold among the other communities; and
when the target community does not exist among the other communities, creating the second community.

10. The method according to claim 9, wherein the method further comprises:
when the target community exists among the other communities, creating a second community combination, wherein the second community combination is the same as a first community combination comprising the first community and the target community, the second community combination comprises the second community and a third community, the third community is the same as the target community, and the second community combination is used to share a part of load of the first community combination.

11. The method according to any one of claims 1 to 10, wherein the method further comprises:

if the target component does not meet the first preset condition, determining a hot point and a hot link based on a call relationship between cloud service components in the first community, wherein the hot point is a cloud service component with a relatively high call frequency among the plurality of cloud service components in the first community, and the hot link is a link with a relatively high call frequency between the plurality of cloud service components; and
processing the hot point and the hot link based on a preset mitigation policy, wherein the preset mitigation policy is used to enable the processed hot point and hot link to meet respective current load requirements.

12. The method according to claim 11, wherein

the hot point is top N cloud service components with highest popularity values among the plurality of cloud service components comprised in the first community, wherein the popularity value is a sum of an out-degree of a cloud service component and an in-degree of the cloud service component, and N is an integer greater than 0; and the hot link is top M links with highest call frequencies among a plurality of links between the plurality of cloud service components comprised in the first community, wherein M is an integer greater than 0.

13. The method according to claim 11 or 12, wherein processing the hot point based on the preset policy comprises:

determining a target hot point mitigation policy from a first target correspondence based on an identifier of a community in which the hot point is located and a second target feature of the hot point, wherein the first target correspondence comprises a correspondence between identifiers of the plurality of communities, a plurality of third preset conditions, and a plurality of hot point mitigation policies, the second target feature is a feature specified in advance by the user among a plurality of features of the hot point, and the third preset condition is used to determine whether to perform capacity expansion on the hot point; and
processing the hot point based on the target hot point mitigation policy.

14. The method according to claim 13, wherein
the hot point mitigation policy comprises: reset scaling and/or horizontal scaling.

15. The method according to any one of claims 11 to 14, wherein processing the hot link based on the preset policy comprises:

determining a target hot link mitigation policy from a second target correspondence based on a third target feature of the hot link, wherein the second target correspondence comprises a correspondence between a plurality of fourth preset conditions and a plurality of hot link mitigation policies, and the third target feature is a feature specified in advance by the user among a plurality of features of the hot link; and
processing the hot link based on the target hot link mitigation policy.

16. The method according to claim 15, wherein
the hot link mitigation policy comprises: lateral scaling and/or longitudinal scaling.

17. The method according to claim 11 or 12, wherein processing the hot point and the hot link based on the preset policy comprises:

determining a target type template from a plurality of preset type templates based on a distribution feature of the hot point and the hot link, wherein the distribution feature is used to represent spatial location information of the hot point and the hot link, and the target type template is a type template having a highest degree of matching with the distribution feature among the plurality of preset type templates;
determining, from a correspondence between a plurality of type templates and a plurality of mitigation policies, a target mitigation policy corresponding to the target type template; and
processing the hot point and the hot link based on the target mitigation policy.

18. A management apparatus, wherein the management apparatus comprises a grouping module and a creation module, wherein

the grouping module is configured to group a plurality of cloud service components in a cloud platform into a plurality of communities based on call relationships between the plurality of cloud service components, wherein each community comprises at least two of the plurality of cloud service components, a degree of closeness of a call relationship between cloud service components comprised in each community is greater than or equal to a preset degree of closeness, and a degree of closeness between a cloud service component in any one of the plurality of communities and a cloud service component in another one of the plurality of communities is less than the preset degree of closeness; and
the creation module is configured to create a second community if a target component in a first community of the plurality of communities meets a first preset condition, wherein the second community is the same as the first community, the second community is configured to share a part of load of the first community, the first preset condition indicates that performance of the target component is lower than preset performance, the first community is any one of the plurality of communities, and the target component is at least one of a plurality of cloud service components in the first community.

19. The management apparatus according to claim 18, wherein

the call relationship comprises one or more of the following:
call information of the plurality of cloud service components in the cloud platform, a call frequency of a link between any two of the plurality of cloud service components in the cloud platform, and an out-degree and an in-degree of any one of the plurality of cloud service components in the cloud platform.

20. The management apparatus according to claim 18 or 19, wherein
the grouping module is specifically configured to group the plurality of cloud service components into the plurality of communities based on a community discovery algorithm and the call relationships.

21. The management apparatus according to any one of claims 18 to 20, wherein
the target component comprises: a cloud service component that meets a second preset condition among the plurality of cloud service components in the first community, or at least one cloud service component specified by a user among the plurality of cloud service components in the first community.

22. The management apparatus according to claim 21, wherein
the second preset condition comprises top X cloud service components with highest popularity values among the plurality of cloud service components in the first community, wherein the popularity value is a sum of an out-degree of a cloud service component and an in-degree of the cloud service component, and X is an integer greater than 0.

23. The management apparatus according to any one of claims 18 to 22, wherein
the creation module is configured to create the second community if a first target feature of the target component meets the first preset condition, wherein the first target feature is at least one feature specified by the user among a plurality of features of the target component.

24. The management apparatus according to claim 23, wherein
the first target feature comprises at least one of processor CPU usage, memory usage, and an I/O throughput.

25. The management apparatus according to claim 24, wherein

when the first target feature comprises the CPU usage, the first preset condition comprises: the CPU usage is higher than preset CPU usage;
when the first target feature comprises the memory usage, the first preset condition comprises: the memory usage is higher than preset memory usage; or
when the first target feature comprises the I/O throughput, the first preset condition comprises: the I/O throughput is higher than a preset I/O throughput.

26. The management apparatus according to any one of claims 18 to 25, wherein the management apparatus further comprises an obtaining module and a determining module, wherein

the obtaining module is configured to obtain modularity between the first community and each of other communities than the first community among the plurality of communities, wherein the modularity is a value used to describe a degree of closeness of a call relationship between communities;
the determining module is configured to determine, based on the modularity, whether a target community exists among the other communities, wherein the target community is a community whose modularity with the first community is greater than a threshold among the other communities; and
the creation module is configured to create the second community when the target community does not exist among the other communities.

27. The management apparatus according to claim 26, wherein
the creation module is configured to create a second community combination when the target community exists among the other communities, wherein the second community combination is the same as a first community combination comprising the first community and the target community, the second community combination comprises the second community and a third community, the third community is the same as the target community, and the second community combination is used to share a part of load of the first community combination.

28. The management apparatus according to any one of claims 18 to 27, wherein

the determining module is configured to determine a hot point and a hot link based on a call relationship between cloud service components in the first community if the target component does not meet the first preset condition, wherein the hot point is a cloud service component with a relatively high call frequency among the plurality of cloud service components in the first community, and the hot link is a link with a relatively high call frequency between the plurality of cloud service components; and

the determining module is further configured to process the hot point and the hot link based on a preset mitigation policy, wherein the preset mitigation policy is used to enable the processed hot point and hot link to meet respective current load requirements.

29. The management apparatus according to claim 28, wherein

the hot point is top N cloud service components with highest popularity values among the plurality of cloud service components comprised in the first community, wherein the popularity value is a sum of an out-degree of a cloud service component and an in-degree of the cloud service component, and N is an integer greater than 0; and the hot link is top M links with highest call frequencies among a plurality of links between the plurality of cloud service components comprised in the first community, wherein M is an integer greater than 0.

30. The management apparatus according to claim 27 or 28, wherein

the determining module is configured to determine a target hot point mitigation policy from a first target correspondence based on an identifier of a community in which the hot point is located and a second target feature of the hot point, wherein the first target correspondence comprises a correspondence between identifiers of the plurality of communities, a plurality of third preset conditions, and a plurality of hot point mitigation policies, the second target feature is a feature specified in advance by the user among a plurality of features of the hot point, and the third preset condition is used to determine whether to perform capacity expansion on the hot point; and the determining module is further configured to process the hot point based on the target hot point mitigation policy.

31. The management apparatus according to claim 30, wherein
the hot point mitigation policy comprises: reset scaling and/or horizontal scaling.

32. The management apparatus according to any one of claims 28 to 31, wherein

the determining module is configured to determine a target hot link mitigation policy from a second target correspondence based on a third target feature of the hot link, wherein the second target correspondence comprises a correspondence between a plurality of fourth preset conditions and a plurality of hot link mitigation policies, and the third target feature is a feature specified in advance by the user among a plurality of features of the hot link; and the determining module is further configured to process the hot link based on the target hot link mitigation policy.

33. The management apparatus according to claim 32, wherein
the hot link mitigation policy comprises: lateral scaling and/or longitudinal scaling.

34. The management apparatus according to claim 28 or 29, wherein

the determining module is configured to determine a target type template from a plurality of preset type templates based on a distribution feature of the hot point and the hot link, wherein the distribution feature is used to represent spatial location information of the hot point and the hot link, and the target type template is a type template having a highest degree of matching with the distribution feature among the plurality of preset type templates; and the determining module is further configured to determine, from a correspondence between a plurality of type templates and a plurality of mitigation policies, a target mitigation policy corresponding to the target type template; and process the hot point and the hot link based on the target mitigation policy.

35. A computing device cluster, comprising at least one computing device, wherein each computing device comprises a processor and a memory; and
the processor of the at least one computing device is configured to execute instructions stored in the memory of the at least one computing device, so that the computing device cluster performs the method according to any one of claims 1 to 17.

**36.** A computer-readable storage medium, storing computer instructions, wherein when the computer instructions are run on a computing device, the computing device is enabled to perform the method according to any one of claims 1 to 17.

**37.** A computer program product comprising instructions, wherein when the instructions are run by a computing device cluster, the computing device cluster is enabled to perform the method according to any one of claims 1 to 17.

**Cloud platform system**

Cloud platform

| Cloud service A | Cloud service B | ... | Cloud service N |

Management device

Cloud service component A1
Cloud service component A2
...
Cloud service component AX

Cloud service component B1
Cloud service component B2
...
Cloud service component BX

Cloud service component N1
Cloud service component N2
...
Cloud service component NX

FIG. 1

**Management device**

S110: Obtain call relationships between a plurality of cloud service components in a cloud platform

Call relationship

②  ③  ⑥  ④  ⑤  ①

S120: Group into a plurality of communities

Call relationship

Community A

②  ③  ⑥  ④  ⑤  ①

Community B

S130

Does a target component in a first community meet a first preset condition?

Yes

No

S140: Create a second community

End

Call relationship

Community A

②  ③  ⑥  ④  ⑤  ①

Community B

3'  2'

Community A'

1'

FIG. 2

○ represents a cloud service component

FIG. 3

represents a cloud service component

FIG. 4

S141: A management device obtains modularity between a first community and each of other communities than the first community among a plurality of communities

S142

Determine whether a target community exists among the other communities

Yes

No

S144: The management device creates a second community combination

S143: The management device creates a second community

FIG. 5

S210: A management device determines a hot point and a hot link based on a call relationship between cloud service components in a first community

S220: The management device processes the hot point and the hot link based on a preset mitigation policy

FIG. 6

rij(x) indicates that a node i
calls a node j for x times

r11(2) r12(1) r13(2) r14(2) r15(2)
r21(1) r22(1) r23(5) r24(3) r25(8)
r31(3) r32(4) r33(0) r34(2) r35(6)
r41(2) r42(1) r43(3) r44(0) r45(2)
r51(7) r52(2) r53(2) r54(9) r55(5)

FIG. 7

S210: A management device determines a hot point and a hot link based on a call relationship between cloud service components in a first community

S220: The management device processes the hot point and the hot link based on a preset mitigation policy

S220a: The management device determines a target hot point mitigation policy from a first target correspondence based on an identifier of a community in which the hot point is located and a second target feature of the hot point

S220b: The management device processes the hot point based on the target hot point mitigation policy

S220c: The management device determines a target hot link mitigation policy from a second target correspondence based on a third target feature of the hot link

S220d: The management device processes the hot link based on the target hot link mitigation policy

FIG. 8

S210: A management device determines a hot point and a hot link based on a call relationship between cloud service components in a first community

S220: The management device processes the hot point and the hot link based on a preset mitigation policy

S220A: The management device determines a target type template from a plurality of preset type templates based on a distribution feature of the hot point and the hot link

S220B: The management device determines, from a correspondence between a plurality of type templates and a plurality of mitigation policies, a target mitigation policy corresponding to the target type template

S220C: The management device processes the hot point and the hot link based on the target mitigation policy

FIG. 9

Centralized template

Link template

Distributed template

FIG. 10

Management apparatus

Grouping module 1101

Obtaining module 1103

Determining module 1104

Creation module 1102

FIG. 11

Processor

Communication interface

Bus

Memory 106

Grouping module 1101

Creation module 1102

Obtaining module 1103

Determining module 1104

Computing device 100

FIG. 12

FIG. 13

## INTERNATIONAL SEARCH REPORT

| International application No. |
| --- |
| **PCT/CN2024/071300** |

| A. | CLASSIFICATION OF SUBJECT MATTER |
| --- | --- |

H04L 67/1008(2022.01)i

According to International Patent Classification (IPC) or to both national classification and IPC

| B. | FIELDS SEARCHED |
| --- | --- |

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNTXT, CNKI, ENTXT, ENTXTC, VEN: 云, 服务, 组件, 依赖关系, 调用关系, 克隆, 负载, 负担, 负荷, cloud, service, component, dependen+, call+, clon+, load

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 112148484 A (PEKING UNIVERSITY) 29 December 2020 (2020-12-29) description, paragraphs 0001-0070 | 1-37 |
| Y | CN 109643249 A (ALCATEL LUCENT) 16 April 2019 (2019-04-16) description, paragraphs 0002-0092, and claims 1-15 | 1-37 |
| A | US 2021084108 A1 (HUAWEI TECHNOLOGIES CO., LTD.) 18 March 2021 (2021-03-18) entire document | 1-37 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **18 March 2024** | **22 March 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/071300**

| Patent document cited in search report | | | Publication date (day/month/year) | Patent family member(s) | | | Publication date (day/month/year) |
|---|---|---|---|---|---|---|---|
| CN | 112148484 | A | 29 December 2020 | None | | | |
| CN | 109643249 | A | 16 April 2019 | WO | 2018029047 | A2 | 15 February 2018 |
| | | | | KR | 20190039757 | A | 15 April 2019 |
| | | | | JP | 2019525650 | A | 05 September 2019 |
| | | | | EP | 3282359 | A1 | 14 February 2018 |
| | | | | US | 2021289385 | A1 | 16 September 2021 |
| US | 2021084108 | A1 | 18 March 2021 | WO | 2019228059 | A1 | 05 December 2019 |
| | | | | EP | 4231151 | A1 | 23 August 2023 |
| | | | | EP | 3790255 | A1 | 10 March 2021 |
| | | | | CN | 108989384 | A | 11 December 2018 |

Form PCT/ISA/210 (patent family annex) (July 2022)

**REFERENCES CITED IN THE DESCRIPTION**

**Patent documents cited in the description**

- CN 202310492451

- CN 202310820305